# EUROPEAN PATENT APPLICATION

(11) **EP 1 768 016 A2**
(43) Date of publication of application: **28.03.2007**
(21) Application number: 05021961.7
(22) Date of filing: 07.10.2005
(51) Int. Cl.: G06F 3/12

(54) **Simulation and web based print stream optimization**

(30) Priority: 08.09.2005 US 714824 P
(71) Applicant: Bowe Bell + Howell Company, Durham, NC 27713 (US)
(72) Inventor: Huntley, Steven, R., Raleigh, NC 27604 (US); Selph, Robert J., Raleigh, NC 27606 (US); Elliott, Sara A., Towson, MD 21286 (US); Conard, Walter S., Lake Villa, IL 60046 (US)
(74) Representative: Schoppe, Fritz

(57) **Abstract**

An optimization service is provided for optimizing the run-time performance of a document processing system. The method of optimization includes analyzing an electronic file representing soft copy documents for a plurality of documents to be printed and processed through a document processing system to estimate an expected result of an optimizing operation if the printed documents are processed through the document processing system in accord with the optimizing operation. The estimate of the expected result of the optimizing operation is then presented to the user. If simulated performance information from the service provider regarding expected performance is favorable to the user, the user instructs the service provider to perform the selected optimizing operation. Recommended optimization techniques may be provided to enhance future performance of the document processing system, based on a comparative analysis.

## Description

### Related Applications

This application claims the benefit of U.S. Provisional Application No. 60/714,824, Filed on September 8, 2005, entitled "SIMULATION AND WEB BASED PRINT STREAM OPTIMIZATION," the disclosure of which also is entirely incorporated herein by reference.

This application also claims the benefit of U.S. Provisional Application No. 60/616,625 Filed on October 8, 2004, entitled "MULTI-CHANNEL PRINT STREAM OPTIMIZER FOR DOCUMENT PROCESSING," the disclosure of which also is entirely incorporated herein by reference.

Further, this application is a continuation-in-part and claims the benefit of U.S. Utility Application No. 11/217,458, Filed on September 2, 2005, entitled "MULTI-PRINT STREAM PROCESSING MODULE OPTIMIZER FOR DOCUMENT PROCESSING," the disclosure of which also is entirely incorporated herein by reference.

### Technical Field

The subject matter presented herein relates to a method, apparatus and program product for evaluating data of a print stream to determine and display the level of optimization that can be achieved. The optimization re-orders data for documents in the print stream to enhance throughput of printed-document processing machine or system, such as an inserting machine that is used to insert printed material into an envelope.

### Background

Mail processing facilities often use mail processing machines to print and insert mail into envelopes. The speed of these inserters is greatly influenced by the amount of material or number of pages per package. As the number of pages for a given package increase, overall speed per page of an inserter decreases. This is because as a larger package is assembled, components upstream from an assembly module slow down until assembly is complete. Hence, the assembly module limits the speed of the entire machine.

Moreover, mail processing facilities that print and process large amounts of mail obtain postal discounts if the mail is grouped by common destinations. Mail can either be grouped before or after printing. After-print grouping adds additional effort to the mail producing process. Alternatively, grouping software groups mail before it is ever printed, and arranges the mail in a way that accomplishes maximum postal discounts.

A need has arisen to increase the throughput of mail processing machines while maintaining postal discounts.

### Summary

In the related cases cited above, certain processes by which to optimize processing of the groups of mail were developed to be run on data files for these mail groups before printing. Each of these processes is managed from a computer via an interface, in this case a browser-based web application. However, the interface is not limited to the browser implementation and could be implemented in a desktop application as well. As a further enhancement, it would be desirable to assess the value of running one or more of these optimizations on a grouping of mail and to make a decision as to whether to proceed to print with these optimizations. If optimization is shown to improve operating efficiency, and the user wishes to perform the print stream optimization, it may be desirable to optimize the file remotely, e.g. using the World Wide Web, and return the file to the user for optimized printing and further mail processing. Alternatively or in addition, it may be desirable to offer recommendations regarding further optimization techniques, to enhance future performance of the document processing system, based on a comparative analysis.

Hence, a first method might offer a print optimization. The method involves analyzing an electronic file representing soft copy documents, for a number of documents to be printed and processed through a document processing system. The analysis provides an estimate of an expected result of an optimizing operation, if the printed documents are processed through the document processing system in accord with the optimizing operation. The method also involves presenting the estimate of the expected result of the optimizing operation to a user.

In an example of such a technique, a provider offers print optimization as a service. In such an example, the provider would typically receive an acceptance of the optimizing operation from the user, following presentation of the estimate of the expected result, e.g. if the user feels that the optimization will provide a valuable performance improvement in physical document processing. In such an event, the technique further entails running the optimizing operation on the electronic file to generate an optimized print file, and sending the optimized print file for processing by the document processing system, e.g. back to the user in exchange for agreement or payment of a fee for the service.

The method of offering a print optimization might offer any one or more of a wide range of different types of optimization that can be performed on the soft copy data prior to printing and processing of printed documents. Examples described below include a dual dependent channel print stream optimization and a multi-channel print stream optimization.

In an example of the service offering technique, the presentation of the estimate of the expected result provides a graphical representation of the estimate of the expected result of the optimizing operation via a graphical user interface for consideration by the user. The analysis may estimate the expected result at least in part on the basis of information regarding performance characteristics of the document processing system and attributes of the soft copy documents contained in the print file. The estimate of the expected result may include an expected performance result and/or an expected cost of performing the optimizing operation on the print file.

Another technique disclosed herein enables selection of an optimizing operation offered by a service provider, for application to soft copy documents. This technique entails submitting an electronic file representing soft copy documents to the service provider. The service provider is informed of a selection of an optimizing operation from among a plurality of optimizing operations offered by the service provider, for example by receiving a selection from a menu or the like listing available service offerings. The method also involves receiving and considering simulated performance information from the service provider, regarding expected performance of a document processing system upon processing the print file if optimized in accord with the selected optimizing operation. The service provider may receive an instruction to perform the selected optimizing operation.

Another method discussed herein offers a service to enhance document processing system performance. This method involves analyzing run-time data for actual operation of a document processing system collected during system processing of documents in accordance with the optimization process. The analysis of the run-time data for the actual operation of the document processing system is compared to an estimate of run-time data in accord with an available optimization service. It is then possible to recommend one or more optimization techniques, to enhance future performance of the document processing system, based on a result of the comparison.

The method, for example, will often involve a subsequent request for a specific optimization service, received from a customer/user. In response to the request, the service provider generates an optimized version of the electronic file representing soft copy documents processed in accord with the requested specific optimization service. Examples of the available optimization techniques include a consulting service offered by an optimization service provider, product recommendations related to one or more document processing systems, a document processing system service plans and a staffing recommendation.

Those skilled in the art will recognize that the techniques outlined above will often be implemented using programmed computers and/or network communications. Hence, the methodology may be embodied in appropriate programmed computer systems or in software products for programming one or more such systems.

Additional advantages and novel features will be set forth in part in the description which follows, and in part will become apparent to those skilled in the art upon examination of the following and the accompanying drawings or may be learned by production or operation of the examples. The advantages of the present teachings may be realized and attained by practice or use of the methodologies, instrumentalities and combinations particularly pointed out in the appended claims.

### Brief Description of the Drawings

The drawing figures depict one or more implementations in accord with the present teachings, by way of example only, not by way of limitation. In the figures, like reference numerals refer to the same or similar elements.

Fig. 1 depicts an exemplary high-level block diagram of a networked computer system.

Fig. 2 depicts a general computer used in conjunction within the networked computer system described herein.

Fig. 3 depicts the process by which print optimizations are tested against a set of criteria to determine whether or not the process should be performed.

Fig. 4 depicts the overall process by which PSO simulation is implemented.

Fig. 5 depicts the process by which print streams are optimized for dual channel independent inserters.

Fig. 6.0 depicts the process by which a user would interact with the web-based system to analyze the data and view estimated or expected results of the print stream optimizations via a web interface.

Fig. 6.1 depicts the selection of document type for processing.

Fig. 6.2 depicts the selection of type of mail processing equipment to be used for manufacturing the documents.

Fig. 6.3 depicts a "dashboard" type presentation for estimated optimization performance gains.

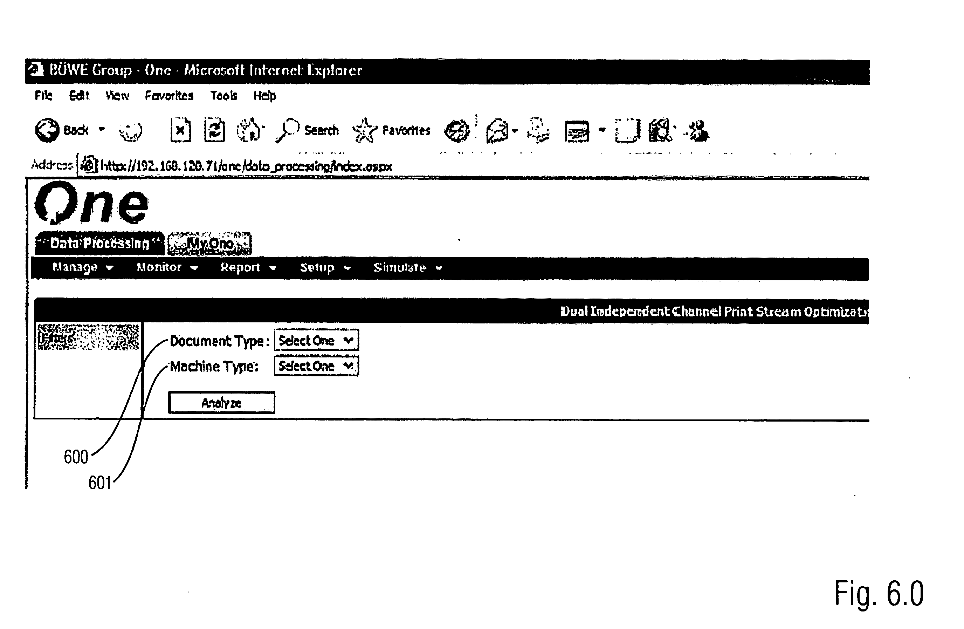

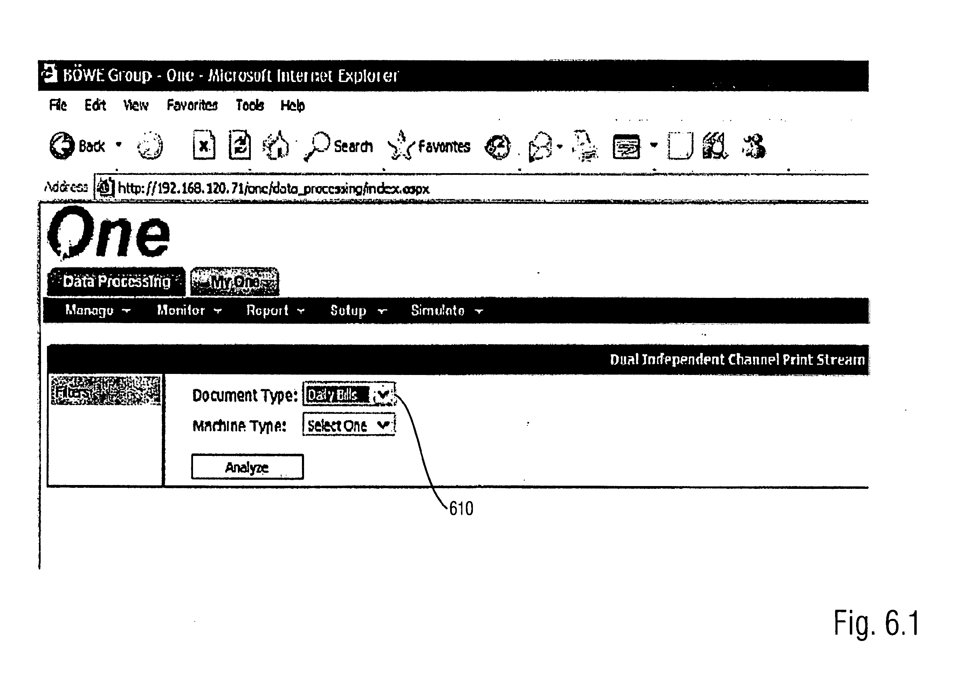

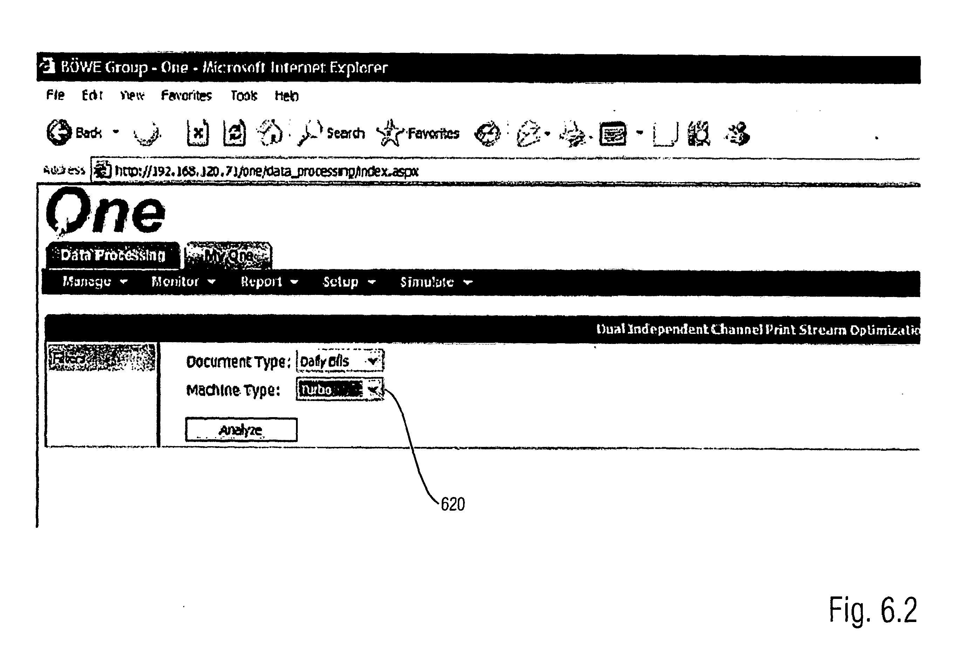

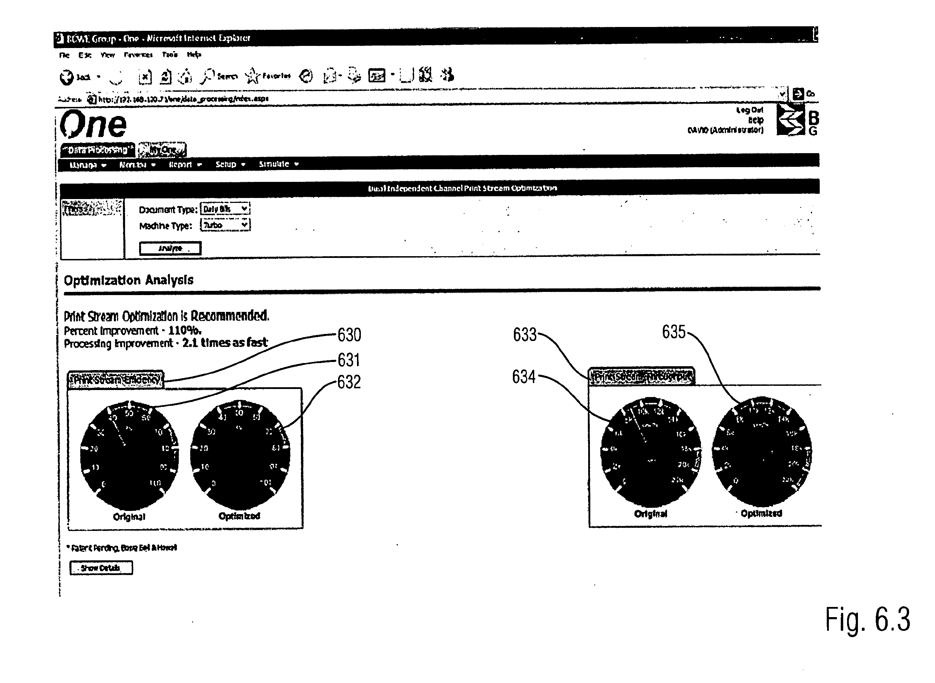

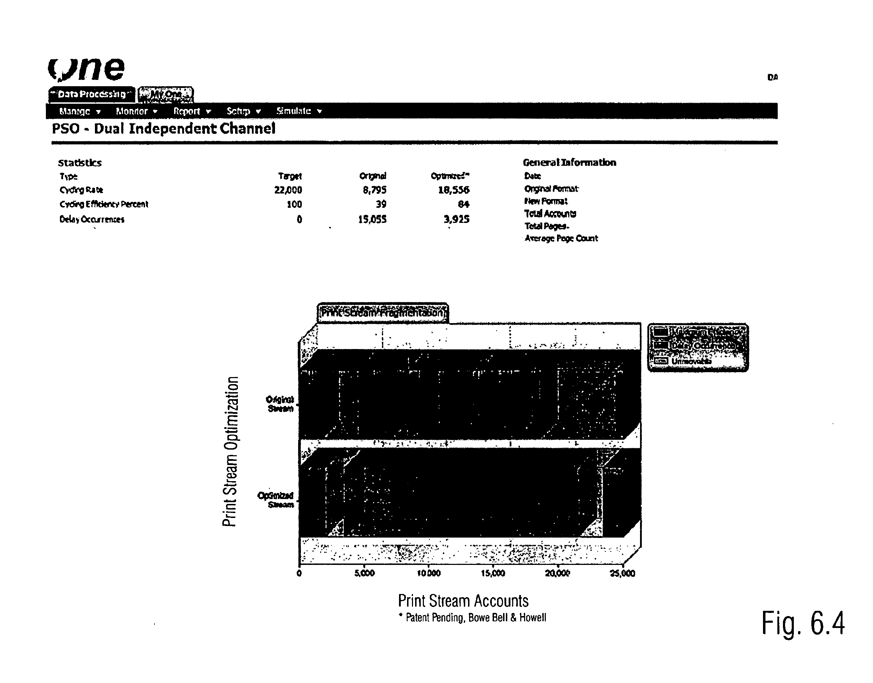

Fig. 6:4 depicts a graphical representation of the de-fragmentation of the print file that is created by optimization.

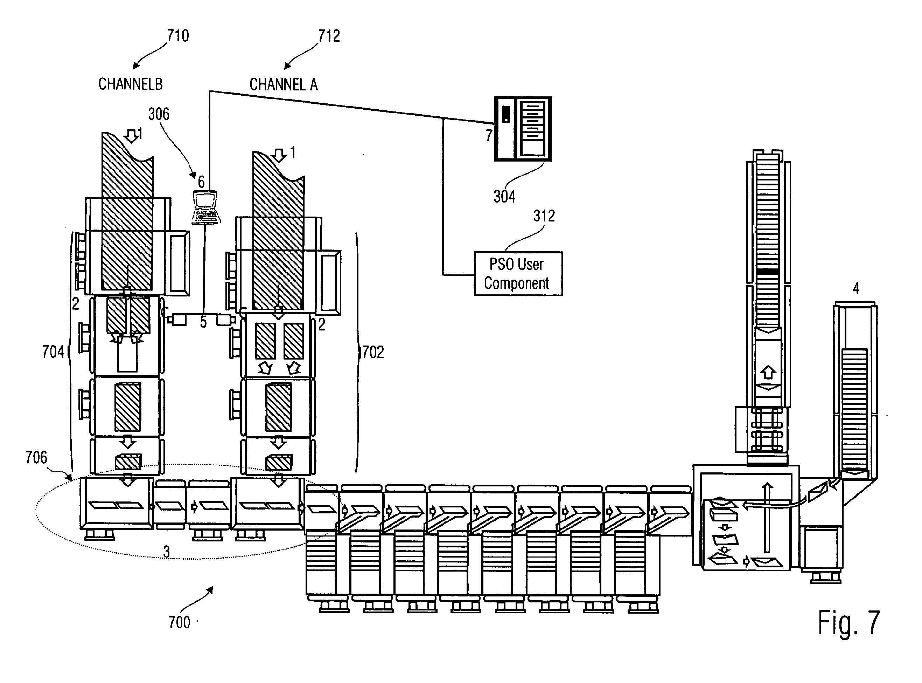

Fig. 7 depicts an exemplary document processing system.

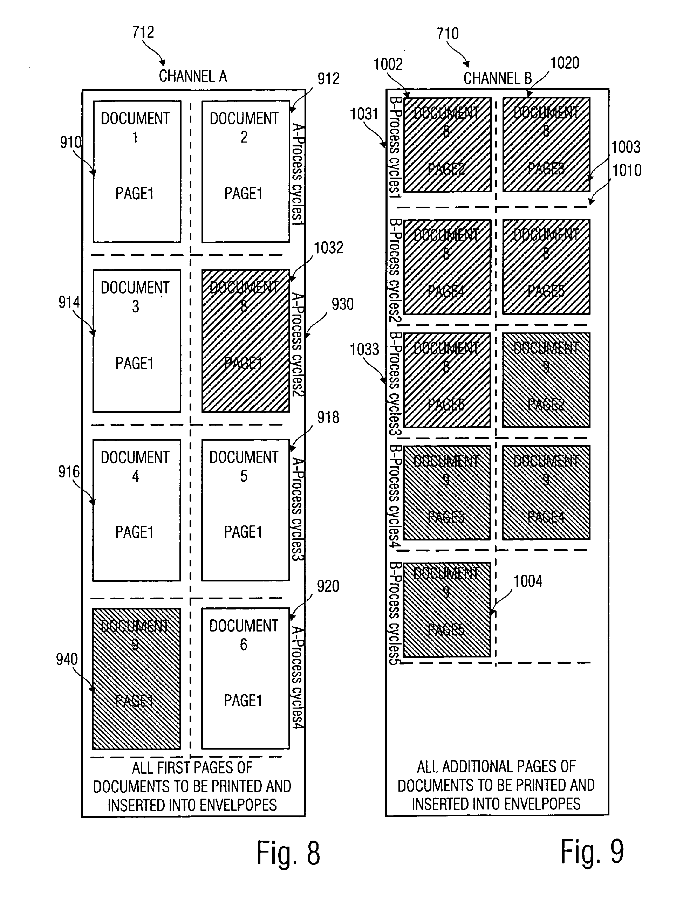

Fig. 8 illustrates a possible grouping of documents prior to optimization for a dual dependent input channel inserter to achieve maximum throughput.

Fig. 9. Illustrates how a group of documents would be organized on printed medium in order to maximize the throughput of an inserter equipped with two dependant input processing modules.

### Detailed Description

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and circuitry have been described at a relatively high-level, without detail, in order to avoid unnecessarily obscuring aspects of the present teachings.

Prior to printing, optimizing one or more multiple print streams involves a manipulation of soft copy document(s) in a print file for a mail run. Similarly, optimizing may involve the manipulation of print file data, wherein the data is representative of the print file or softcopy documents to be generated by the printer. So, for example, soft copies of documents may be reordered in the print file to pair-up soft copies of documents with odd numbers of pages, to minimize mismatches during two-up printing. Another example of optimizing balances an operation time of parallel print stream processing modules. In such an example, each soft copy document in the print file for a group of mail pieces may be assigned to a print stream for actual documents that will be processed through one of the modules, based on an attribute of the respective document (soft copy or actual), so as to optimize downstream parallel processing of the printed documents through the modules. The manipulation of the soft copy documents, such as via the print file, may also optimize other aspects of the subsequent processing of the printed documents, e.g. to facilitate sorting and/or maximize postal discounts on the finished document set. The optimizing facilitates better document processing for a group of soft copy documents that may be split into two coordinated print streams, and run in production on an inserting machine with two input channels. More detailed discussions of examples of such print stream optimizing may be found in the above-incorporated Utility Application No. 11/217,458, entitled "MULTI-PRINT STREAM PROCESSING MODULE OPTIMIZER FOR DOCUMENT PROCESSING."

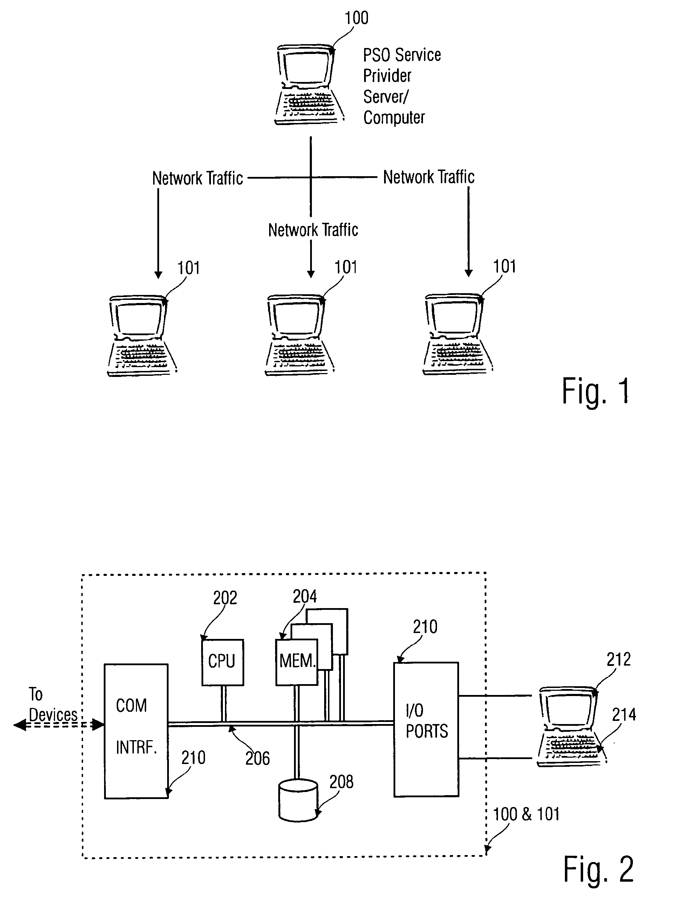

Fig. 1 depicts a high-level block diagram of a networked computer system by which one or more print stream optimization schemes can be simulated on or applied to an electronic file representing soft copy documents for a group of mail pieces, prior to the print run, utilizing the concepts discussed herein. Essentially, the server 100 contains the code necessary for storing, analyzing and providing the estimated optimization results of the data to the client machine 101 via a computer network 102. The optimization and simulation service, that is hosted on the server 100, processes electronic files representing soft copy documents from the various clients 101 to simulate the results of the a print stream optimization and predict the mail processing performance improvement that will result from the optimization service. Alternately, the client may have the optimization capability located at the user location 300 and run this process on a local computer or server 100, 101.

Fig. 2 is a functional block diagram of such a computer system 100 or 101. The computer system 100 receives print files or generates print files from a job file, develops optimized print streams. Based on these print streams, the computer system 100 may send mail qualification data or other reports required by USPS or other postal authority to a printer (not shown) or another appropriate output device based the print streams sent to the printer. Alternately this data can be provided electronically. The computer system 101 is a client machine that uses a web browser to access the information via communication with a web server on computer system 100. From the system, inputs to direct the operations for computer system 100 may be input and communicated.

The exemplary computer system 100, 101 may include a central processing unit (CPU) 202, memories 204, and an interconnect bus 206. The CPU 202 may contain a single microprocessor, or may contain a plurality of microprocessors for configuring the computer system 100 as a multi-processor system. The memories 204 include a main memory, a read only memory, and mass storage devices such as various disk drives, tape drives, etc. The main memory typically includes dynamic random access memory (DRAM) and high-speed cache memory. In operation, the main memory stores at least portions of instructions for execution by the CPU 202 and data for processing in accord with the executed instructions.

The mass storage 208 may include one or more magnetic disk or tape drives or optical disk drives, for storing data and instructions for use by CPU 202. For a workstation PC, for example, at least one mass storage system 208 in the form of a disk drive or tape drive, stores the operating system and application software as well as a data file. The mass storage 208 within the computer system 100, 101 may also include one or more drives for various portable media, such as a floppy disk, a compact disc read only memory (CD-ROM or DVD-ROM), or an integrated circuit non-volatile memory adapter (i.e. PC-MCIA adapter) to input and output data and code to and from the computer system.

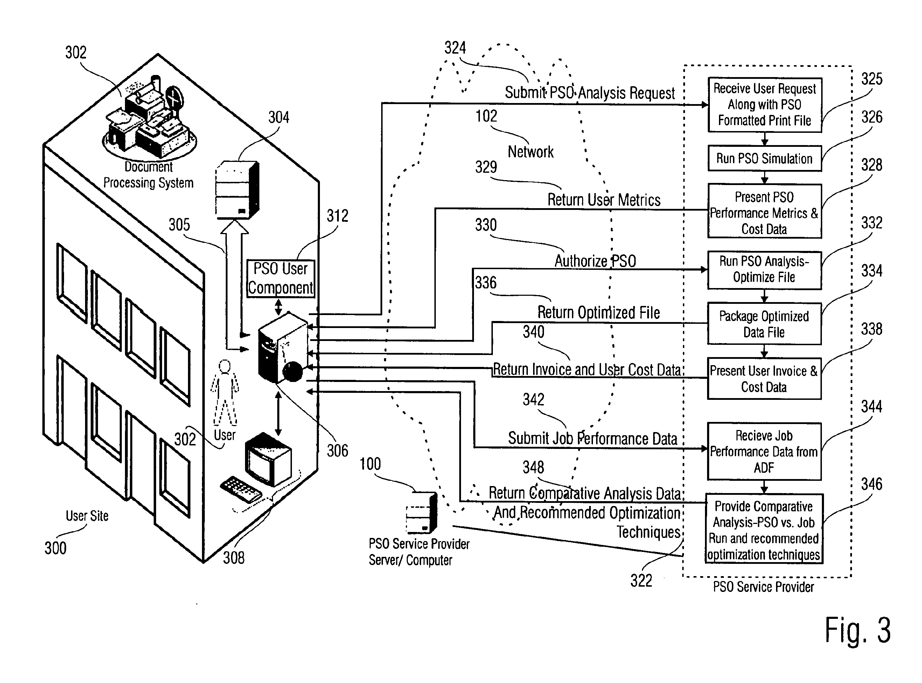

The computer system 100, 101 also includes one or more input/output interfaces 210 for communications, shown by way of example as an interface for data communications via a network 102 or direct line connection. The interface may be a modem, an Ethernet card or any other appropriate data communications device. The physical communication links may be optical, wired, or wireless. The network or discrete interface may further connect to various electrical components of the document processing modules, discussed herein, to transmit instructions and receive information for control thereof. The network or discrete interface also will connect to the detector (shown in Fig. 3) to receive data associated with the printed material. The network may utilize any type of communication implementation for receiving and transmitting information to and from components of the inserter and components external to the inserter.

The computer system 100, 101 may further include appropriate input/output ports for interconnection with a display 212 and a keyboard 214 serving as the respective user interface. For example, the computer system 100 may include a graphics subsystem to drive the output display. The output display may include a cathode ray tube (CRT) display or liquid crystal display (LCD). Although not shown, the PC type system typically would include a port for connection to a printer. The input control devices for such an implementation of the system would include the keyboard for inputting alphanumeric and other key information. The input control devices for the system may further include a cursor control device (not shown), such as a mouse, a trackball, a touchpad, stylus, or cursor direction keys. The links of the peripherals to the system may be wired connections or use wireless communications.

The computer system 100 shown and discussed is an example of a platform supporting processing and control functions of the print stream optimization simulation described herein. The optimizing functions and the computer processing operations discussed herein may reside on a single computer system, or two separate systems; or one or both of these functions may be distributed across a number of computers.

The computer system 101 shown and discussed in an example of a platform supporting communication with the computer system 101 for the purposes of directing the actions of the print stream optimization simulation described herein.

The software functionalities of the computer system 100 involve programming, including executable code as well as associated stored data. Software code is executable by the general-purpose computer 100 that functions as an inserter controller. In operation, the code and possibly the associated data records are stored within the general-purpose computer platform 100. At other times, however, the software may be stored at other locations and/or transported for loading into the appropriate general-purpose computer system. Hence, the embodiments involve one or more software products in the form of one or more modules of code carried by at least one machine-readable. Execution of such code by a processor of the computer platform enables the platform to implement the print stream optimizing functions and/or related software downloading functions, in essentially the manner performed in the embodiments discussed and illustrated herein.

As used herein, terms such as computer or machine "readable medium" refer to any medium bearing the code or instruction that may participate in providing instructions to a processor for execution. Such a medium may take many forms, including but not limited to, non-volatile media, volatile media, and transmission media. Non-volatile media include, for example, optical or magnetic disks, such as any of the storage devices in any computer(s) operating as the server platform or the client device, discussed above. Volatile media include dynamic memory, such as main memory of such a computer platform. Physical transmission media include coaxial cables; copper wire and fiber optics, including the wires that comprise a bus within a computer system. Carrier-wave transmission media can take the form of electric or electromagnetic signals, or acoustic or light waves such as those generated during radio frequency (RF) and infrared (IR) data communications. Common forms of computer-readable media therefore include, for example: a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

Referring now to Fig. 3, an example in the context of a client/server transaction performed over the network 102 is shown. For simplicity here, a single client/user site is shown, however, those skilled in the art will recognize that the optimization service can be offered by one provider or server to users at a number of different client devices, such as the client devices 101 in Fig. 1.

In the example of Fig. 3, a user site 300 has a document processing system 302 for high speed mail production. The document processing system 302 includes one or more printers (not shown), for printing documents that are to be provided as input into an inserter (not shown) of the document processing system 302. Soft copies of documents to be printed are stored on a file server 304, which maintains a print file for providing data representative of one or more documents to be processed. The data within the print file may be presorted in such a way to qualify for postal discounts, as described earlier. The file server 304 may also communicate with other computing devices via a network 102, such as the Internet or an intranet for communication with internal devices having network connectivity within the user site 300. Such connectivity is illustrated, in the figure, by the arrow 305 between the file server 304 and the network accessible computer 306.

The network accessible computer 306 is equipped with a computer monitor 308 for rendering a graphical user interface (GUI) to a user 310 of the network accessible computer. When accessing information from over the network 102, the GUI may be rendered by interpreting Hypertext Markup Language commands (HTML), XML, Java script, Active X controls, etc. The network accessible computer 306 may be configured to execute various software programs and executables such as word processing software, Internet software, processing modules, etc. One such executable includes the PSO (Print Stream Optimizer) User component 312. The PSO User component 312 is a computer executable program, such as an Active X control, having instructions for appropriately formatting electronic files representing soft copy documents into information such that it may be interpreted by PSO Service Provider component 322-a computer executable service made available by a service provider 322 over a remote network 102 (e.g., the Internet) for optimizing print files in accordance with the present disclosure. The PSO Service Provider component is software functions that are executed on a server or computer system 100. Similarly, the PSO user component can convert print file information formatted for PSO Service Provider component 322 back into the original print file format. As such, a PSO compatible format, or standard, is invoked to ensure proper processing of the unique print file.

While not shown in detail in the illustration, the PSO Service Provider server computer 100 may consist of several interlinked computers, hubs, routers, and other network and/or computing devices. In the foregoing paragraphs, the general communication process that occurs between the user 310 and the PSO Service Provider component 322 over the remote network 102 is described. As described herein, the communication process is known as a session-a transactional process occurring between one or more users or computers over a network. A session may also signify a period of time in which a user interfaces with an application (e.g., such as an application residing upon the user's computer). The user session begins when the user accesses the application and ends when the user quits the application. Sessions, in and of themselves, are well known in the art. However, it will be appreciated by those proficient in the art that the type of session described herein, as performed in the context of document processing systems and the like, dramatically increases document processing system 302 performance, and provides the user 310 with valuable performance metrics. The optimization and simulation service, that is hosted on the server 100, processes electronic files representing soft copy documents from the various clients 101 to simulate the results of the a print stream optimization and predict the mail processing performance improvement that will result from the optimization service. Alternately, the client may have the optimization capability located at his location and run this process on a local computer or server 100, 101.

In the example, the session is initiated when the user 310 submits a PSO analysis request to the PSO Service Provider component 322 (step 324) from over the network 102. Figs. 6.0, 6.1 and 6.2 show possible web based graphical interfaces used to initiate a PSO analysis. Accompanying this request is a print file that has been extracted and/or formatted by the PSO User component 312 for interpretation by PSO Service Provider component 322. The formatting process is intended to reduce the amount of data that must be transmitted, while extraction allows PSO to only receive data necessary to perform the requested analysis and computations. Hence, data transmission rates during the network session, such as during an Internet transaction, may be reduced by sending print file information as opposed to the entire print file. For example, the PSO User component 312 may extract and transmit document header data or file pointers versus the entire print file. Of course, the teachings here are not limited to any one method, as the entire file may indeed be transmitted, or an abstraction thereof. Also, various data compression techniques may be invoked to expedite transmission over information over a medium such as the Internet.

The PSO user component may be down loaded by the requesting party from the PSO web site or provided in advance. In the example, the request is performed over the Internet 102 by logging onto a website administered by the PSO Service Provider component 322 from the user's computer terminal 308. This website may contain various instructions, menus, and windows for interpreting the user 310 request based on selected criteria (e.g., job run type, channel type). Once the login request is accepted and the PSO formatted file is received (step 325), a simulation is performed using the data within the file to indicate, or predict, various performance metrics that may be of interest to the user 310. In the example, the performance metrics are based on the current arrangement of data within the file (step 326) and configuration of the mail processing equipment available at the user site 300 for processing optimized print files. The simulation output may include such metrics as, but are not limited to: cycling rate data, delay occurrences, print stream efficiency data, print stream throughput, cost savings data and other performance characteristics relevant to the document processing system 302. Also included with these metrics may be a recommendation from the PSO Service Provider component 322 as to whether or not the optimization process should be enacted by the user 310 based on the simulation, and relative performance gain or lost percentage achieved with or without the optimization. This data can be presented to the user 310 (step 328) in text, chart, and any other graphical form for ease of use and understanding of the metrics for the user 310. Figs. 6.3 and 6.4 are examples of possible graphical presentations.

In addition to the simulated results described above, cost data is compiled and returned to the user (steps 328 and 329). The cost data provides the user 310 with expected cost information to be incurred when the user accepts the print file optimization. Cost considerations may vary, and can be arranged between the user 310 and the PSO Service Provider component 322 in a variety of ways (e.g., flat fee service, scalable fee, performance based fee, subscriber based, per page count cost, etc.). The fee arrangement agreed upon between the user 310 and the PSO Service Provider component 322 does not limit the scope and novel features of the present teachings.

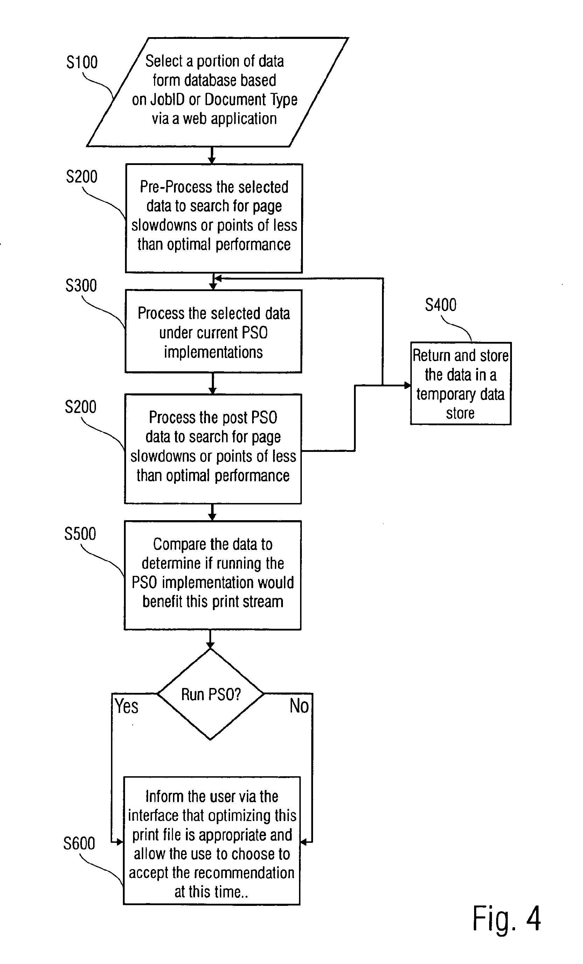

Having reviewed the simulated performance metrics and cost data (step 328), the user 310 has the option of authorizing print file optimization to be performed on the print file (step 330), or not authorizing (e.g., canceling the session). When the user authorizes the optimization, the PSO Service Provider component 322 executes various optimization techniques, which are discussed in later sections of the specification with respect to Figs. 4-5 and 8-10. The specific method of optimization performed will vary depending on the channel processing capabilities of the document processing system 302 being used (e.g., dependent channel vs. independent channel), cost considerations, and other characteristics. While the implementation contemplates two specific forms of print stream optimization based on the manipulation of a print file, the web based PSO service is not limited to any one particular method. In fact, those skilled in the art will appreciate that the optimization techniques discussed herein may be performed in the context of a general user session, in which the PSO optimization service operates as an executable or application residing on the user's computing device. Indeed, various means of optimization may be performed and contemplated for future use.

Once the print file is optimized, it is packaged and returned to the user 310 for storage onto the file'server 304, which is a network capable computer that stores data to be communicated with the document processing system (steps 334 through 336). Upon receiving the print file, the PSO User component 312 operating on the network server 306 formats the data file in a way that is recognizable to the file server 304. Optionally, this information can be formatted such that other software applications executing upon the network accessible computer 306 may render the print file to a graphical user interface-such as to be inspected by the user 310 prior to submission to the file server 304. Example file formats may include Adobe (*.pdf) format, Word (*.doc) format, and other document rendering tools. Regardless of how the print file is stored or presented to the user 310 for analysis, the formatting is performed without jeopardizing the optimization performed on the file in step 332 by PSO Service Provider component 322. Along with the optimized file, a user invoice is returned to the user 310 for billing purposes, and any other relevant cost data (steps 338 through 340).

Upon receiving the print file, the user executes the print file and processes their respective job. As is common with many document processing systems 302, performance and monitoring tools may be used in order to provide onsite performance metrics for the user. Such Enterprise Management Tools are capable of sensing various operations within the entire document processing system, and performing throughput analysis, cycle efficiency checks, and other performance data. When the user 310 finishes the job in its entirety, they may submit job performance data back to the PSO Service Provider component 322, such as in the form of an ADF (automatic document file) (steps 342 and 344). A comparative analysis may then be performed by PSO Service Provider component 322 (step 346), specifically comparing the expected (ideal) results to be attained with the application of optimization service as presented to the user 310 in step 328 versus the actual results attained by the user after implementing the PSO optimized print file. Actual results can include any performance data collected during the actual run-time, or time of execution of the document processing system while under the influence of the optimization service. Ideally, the data collected would include one or more of the same metrics calculated during the simulation of the optimization service. The results of this analysis may then be returned to the user 310 for their review (step 348). Alternatively, the aforementioned process may be reversed, such that the user 310 presents the comparative analysis results to the optimization Service Provider component 322-perhaps under the jurisdiction of some form of data integrity or validation process mandated by the optimization Service Provider component 322-and awaits a response.

This analysis provides added value for both the user 310 and the PSO Service Provider component 322. For example, significant discrepancies between the expected results and the actual results (e.g., a deviation of over X%, as agreed upon contractually) may present an opportunity for a price reduction or cost scaling, saving money for the user 310. On the other hand, the same discrepancies may indicate areas of deficiency within the user's 310 document processing system 302 that may need to be rectified to ensure optimal performance in accordance with the expected results of print stream optimization. A malfunctioning lever arm, paper jamming, operator efficiency, etc., are all variables which affect the performance of the document processing system-all of which are not within control of the PSO Service Provider component 322. Any such problems reveal further opportunities for optimization of the document processing system beyond the initial optimization attempt. As such, the PSO Service Provider component 322 may offer optimization techniques 348 to the user(s) of the document processing system 302 as a value added optimization service. Optimization techniques may include but not limited to recommendations for more efficient equipment, job allocation among available equipment, user utilization, an alternate data optimization services or support service plans to meet the needs of the user 310. Furthermore, PSO Service Provider component 322 may be incorporated for use with existing Enterprise Management tools being utilized within the user site 300, to provide a convenient network based optimization solution for such systems.

It will be greatly appreciated by those skilled in the art that the web based optimization techniques are not limited to simply print file optimization as described herein. Indeed, additional optimization techniques may be applied without jeopardizing the form and function described. Future embodiments may include remote enterprise software solutions, remote job processing, batch analysis, and other procedures, although even those are given only by way of example.

Fig. 4 depicts, in more detail, the process by which the data within the print file is selected and processed in order to determine if PSO should be run on that file prior to print processing. Step One S100 involves selecting the pertinent data from the data store of choice. This data is grouped together by a common identifier, such as the type of mail that normally is grouped together in order to create a mailing (e.g., document type). So, for example, soft copies of documents, within the print file, that are to be processed on a daily basis can be grouped under 'daily run,' while soft copies of documents of a promotional nature can be grouped under 'promo run.' As another example, soft copies for documents may be optionally grouped according to machine type, as certain machines may be used to print certain types of mailings. Fig. 6.0 provides an exemplary graphical user interface for providing this functionality. These characteristics may be customized accordingly to fit the unique needs of the user 310 requiring the optimization analysis.

Once the grouping data is selected, it is submitted to the web-based application in order to be processed. Alternatively, the processing could be executed in a non-networked environment or session, such as via a software executable residing locally on the user's computer. There are two steps of processing that occur as part of the simulation. The first, referred to herein as file scan processing S200, scans the data in order to identify points in the file where lost cycles in processing could occur. These include non-optimal matches of page groups and page count offsets where the machines would need to wait for accumulation, thus resulting in lost cycles. This data is then saved into a temporary data store described in S400.

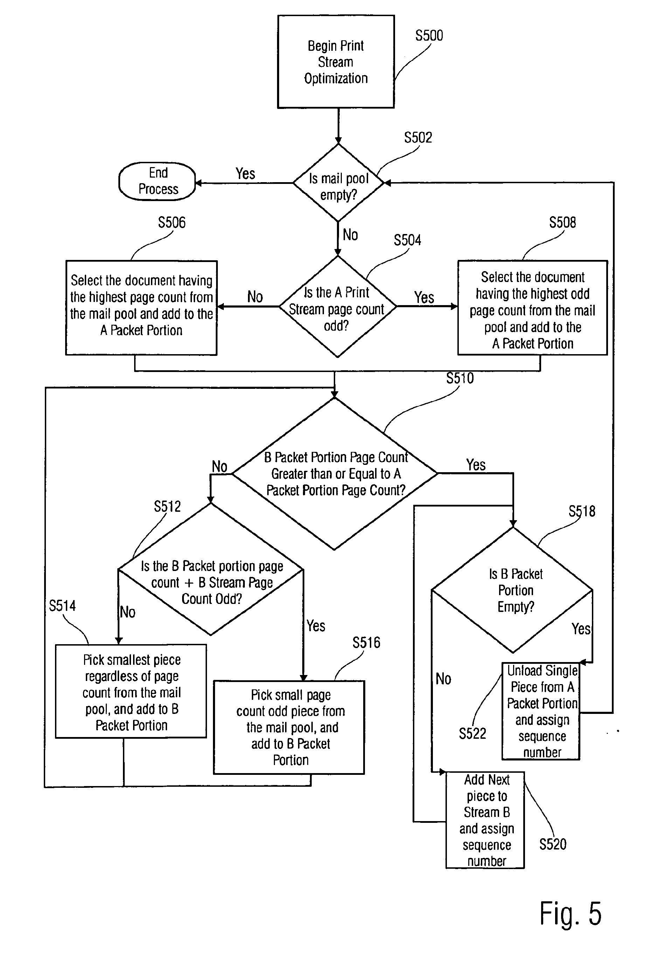

The second exemplary means of optimizing the processing involves reordering the file for Print Stream Optimization S300, hereafter referred to as PSO file, as described in Fig. 4 and Fig. 5. Print stream optimization (PSO) in this example is a process that re-orders the contents of an electronic data file, such as a print file or representation thereof, that contains or references numerous soft copies of documents of various page counts in order to enable an inserter Fig. 7, 800 to operate at its maximum throughput. A soft copy of a document is the electronic file or part thereof that represents an item that when printed as a physical or hard copy document can be delivered to an individual or business. A physical or hard copy document, for example, may be a printed item on a print roll or on fan folded sheets, or a completed envelope containing the full contents to be delivered. Documents may have preprocessing operations performed on them, while in soft copy form and/or after printing in hard copy form, to ensure that they are compliant with Postal regulations such as move update, address accuracy or presorting by zipcode groups. Further details regarding these two means of processing will now be provided in subsequent paragraphs.

Figs 6.0, 6.1, 6.2, 6.3 and 6.4 depict the process by which the user would invoke the application, select the data and perform the Print Stream Analysis on that data via a web interface.

Fig. 6.0 depicts the beginning state of a graphical user interface to enable communication between the user 310 and an optimization service provider 322, shown in this example as a web-based system. After engaging in a standard login or registration process (not shown), a user 310 is presented with various options. In Fig. 6.0, the user 310 selects the type of Print Stream Optimization that he/she wishes to perform on data that exists in the system and an interface associated with that optimization implementation appears. Data in the system may refer to a stored copy of a previously optimized print file, a print file that has not yet been optimized, or the like. Also, the interface allows the user to indicate the machine type 610 upon which they want to operate. Data type is defined as the common identifier that allows the mail to be grouped together, in order, as a single mailing. Machine type 610 is the type of inserting machine that the job is to be processed on, which may be presented to the user as a predefined or user adaptable list. The machine type is important for calculating the throughput on the pre and post optimized print streams.

Fig. 6.1 depicts the user choosing a type of data 610 from the systems data store. Data type within the web-based system is defined as a common characteristic of the data that allows it to be processed together. In the example in Fig. 6.1, the user has selected Daily Bills, a document processing type that will share all common characteristics during processing. Daily Bills would have the same envelope size, inserts and other attributes in a document processing system.

Fig. 6.2 depicts the user choosing a machine type 620. The machine type relates to a specific machine that operates on the mailroom floor. This machine type contains certain characteristics such as throughput speed and cycle rate that will help the web-based application to calculate the improvement percentages to determine if Print Stream Optimization should be performed on the data.

Fig. 6.3 depicts the display to the user of the analyzed data. In this example, Print Stream Optimization improved the performance of the file and the machine by 100%. The print stream efficiency 630 is shown as a percentage of inserter machine cycles used both before 631 and after optimization 632. In addition, the print stream throughput 633 is shown in envelopes processed per hour both before 633 and after 634 optimization. This number is calculated by the pre and post Print Stream Optimization calculations that are described in Fig. 3. The user is presented with a "Show Details" button here as well. If clicked, the user will be presented with more detailed data concerning the analyzed file. In this example, the characteristics associated with the machine type or types in use at the client have been predefmed using another screen not shown.

Fig. 6.4 depicts the results of clicking the "Show Details" button. Detailed and descriptive information is displayed to the user in a graphical format. This information includes the reduction of delay occurrences and the improvement of throughput on the inserter based on the estimate or simulation results that may be expected from the Print Stream Optimization. The graphic detailed herein shows the state of the file both before and after the optimization. In this case, the file was improved significantly via Print Stream Optimization and these details help to communicate that to the user. In this example, the characteristics associated with the machine type or types in use at the client have been pre-defined using another screen not shown.

The examples shown in the above referenced figures are not meant to be limiting in any way. As mentioned previously, the illustrative graphical user interfaces presented in the foregoing figures could be presented alternatively in the context of a session between the user and an application executing upon the user's computer. Nonetheless, those skilled in the art will appreciate the convenience of being presented with various optimization options and robust performance information, including data in a graphical or pictorial form. Of course, it is well known in the art that Internet technology allows various types of information, graphics, executables, text, characters pictures, etc. to be rendered to and entered into a graphical user interface. Indeed, other items or document batch characteristics (e.g., analysis type to restrict the simulation to only a certain type of analysis, such as throughput analysis only) may be used besides those listed above.
In the following sections of the detailed specification, exemplary optimization services relative to Print Stream Optimization 322 are described generally. Namely, Multi-Channel Print Stream Optimization and Dual Channel Print Stream Optimization are described. As stated above, the embodiments discussed herein are not limited to any one form of optimization. The foregoing paragraphs simply provide exemplary optimization techniques, and are described in a generally to stay within the scope of the disclosure.

### MULTI-CHANNEL PRINT STREAM OPTIMIZER FOR DOCUMENT PROCESSING

The exemplary flow chart of Fig. 5 describes the optimization of two print streams, referred to as an "A" stream and a "B" stream. A "packet" corresponds to a sub-group of documents (soft copies) within a given group assigned to the A and B streams. Therefore, an A packet portion corresponds to the portion of the packet assigned to print stream A. A B packet portion corresponds to the portion of the packet assigned to print stream B.

In the exemplary embodiment described with respect to Fig. 5, a balanced operation time may be achieved by assigning soft copy documents, in packets, to the A stream and the B stream such that a print stream processing module processes the packets at substantially the same time. This is achieved by assigning a soft copy document within a packet having a large page count to one print stream and assigning a set of soft copy documents within the packet having smaller page counts to a different print stream. Therefore, the print stream processing module processing the actual printed document having the large page count will finish at substantially the same time as the print stream processing module processing the actual printed documents having the smaller page counts.

Moreover, the print stream processing modules shown in the exemplary embodiment described herein process each print stream in a 2-up format. In the example, 2-up format refers to the alignment of pages in the printed material. Pages within a physical document are aligned side-by-side, where the left hand page is fed into the accumulator first, followed by the right hand page. Such formatting and/or orienting of inputs-where odd page numbers are always on the left-increases throughput for printed documents with even number page counts. However, printed documents having odd page counts can slow processing, as the accumulator must hold back one page since it belongs to the next physical document. The worst case loss of throughput occurs when an even page count document follows an odd page count document such that page one of the even page count document falls on the right side of the input printed material. In this case, all subsequent even page documents will be forced to lose an accumulation cycle.

To address the above stated concerns, the example of Fig. 5 reorders the soft copies of the documents such that when printed a physical document having an odd page count is followed by another physical document having an odd page count. This prevents the miss alignment of even count page documents. Step 500 marks the beginning of the print steam optimization process in which soft copy documents are reordered. In Step 502, it is determined whether or not the mail pool is empty. The mail pool comprises the soft copy document group to be optimized. Once all of the soft copy documents for a given group have been optimized, the mail pool will be empty and the optimization for the given mail pool will end. Assuming that the soft copy documents have not been optimized, i.e. the mail pool is not empty, it is determined whether or not the A print stream page count is odd, i.e. if the sum of all pages for the soft copy documents intended for stream A is an odd number (Step 504). If the page count is not odd, a soft copy of document having the highest page count is selected from the mail pool. This soft copy document is added to the A packet portion (Step 506). If the A print stream page count is odd, a soft copy document having the highest odd page count is selected from the mail pool. This soft copy document is added to the A packet portion (Step 508).

Following either Steps 506 or 508, the B packet portion page count is compared with the A packet portion page count to determine whether the B packet portion page count is greater than or equal to the A packet portion page count. If not, in Step 512 it is determined if the cumulative page count of the B packet portion and the B stream is odd. If the cumulative page count is not odd, in Step 514, the soft copy document having the smallest page count is selected. Since the cumulative page count is not odd, either an even number or odd number page count may be selected. The selected soft copy document is added to the B packet portion. On the other hand, if the cumulative page count is odd, in Step 516, the soft copy document having the smallest odd page count is selected. The selected soft copy document is added to the B packet portion. Following either Steps 514 or 516, the process returns to Step 510.

If in Step 510, the B packet portion page count is greater than or equal to the A packet portion page count, the process advances to Step 518. In Step 518 it is determined if the B packet portion is empty. Typically, the first time this step is performed, the B packet portion will not be empty because a large soft copy document has been assigned to the A packet portion (Steps 506 or 508), however, a set of smaller soft copy documents have not been assigned to the B packet portion. In other words, assigning soft copy documents from the mail pool has not been completed. Therefore, if in Step 518, the B packet portion is not empty, Steps 518 and 520 repeat until the B packet portion is empty. As each soft copy document is assigned to the B print stream, a sequence number is assigned for tracking. Once the B packet portion is empty, a single soft copy document from the A packet portion is unloaded and assigned a sequence number. Following Step 522, the process returns to Step 502 and repeats.

At this time, a balanced operation has been accomplished for a given packet of soft copy documents. In other words, the print stream processing modules will complete processing of the hard copy documents produced from the given packet at substantially the same timing, with a few or no extra cycles from processing physical documents having odd page counts.

Referring back to Fig. 4, the reordered file is then scanned to search for the same non optimal matches of page groups and page count offsets described briefly in S200. The results of this scan are also added to the temporary data store described in S400.

In S500 Once the data from both file scans are stored in the temporary data store; the system performs basic calculations to determine the amount of non-optimal data placement both before and after the PSO optimization. The resulting percentage change is then displayed to the user; and the software tells the user to proceed with the optimization if a percent improvement is received (S600).

In Fig. 5, soft copy documents are grouped based on a common attribute. Each group can be divided into a plurality of sub-groups or packets. Therefore, a packet of soft copy documents corresponds to one or more documents assigned to multiple print streams. A packet includes soft copy documents that are assigned to multiple print stream processing modules for processing of the corresponding physical/printed documents, such that each print stream processing module processes its assigned hard copy documents concurrently with the other print stream processing module(s). This results in a balanced operation time for each print stream processing module. In one exemplary embodiment, a packet may be divided evenly among multiple print stream modules such that the page count for each assigned portions are substantially equal.

Fig. 5 is a flowchart that details one of the possible PSO enhancements to the print stream and Fig 8 shows the output resulting from a different form of optimization, which may be selected at the first step 300 of Fig. 4.

### DUAL DEPENDANT CHANNEL PRINT STREAM OPTIMIZATION

An additional implementation of PSO that can be implemented on soft copy documents in the print file and tested/simulated before actual optimization is dual dependant channel operation, described generally with reference to Figs. 7 and 8. Fig. 7 shows a document processing system 700 that is equipped with two print stream processing modules 702 and 704 for processing documents received from one or more printers (not shown). Upstream from the print stream processing modules are input channels for receiving from the printers, printed or hardcopy documents to be processed by processing modules 704 and 702, labeled Channel B 710 and Channel A 712 respectively (the channel may be taken to correspond to a print stream). Channel B 710, is configured to process documents with certain attributes, while Channel A 712 is configured to process documents with different attributes. In the example discussed the attribute difference is length. As discussed earlier, the document processing system 700 may also be equipped with, or coupled to, one or more computers, such as computer 304 and computer 306, which also corresponds to Fig. 3. Computer 304 operates as a file server for storing electronic data files (e.g., print files) or data representative of the various softcopy documents to be fed to the print stream processing modules 702 and 704 as hardcopy inputs. Computer 306, as described, is a network enabled computer, capable of managing local or remote sessions. Operable with the computers 304 and 306, is the PSO User Component 312, which enables communication between a user and an optimization service provider 322.

Because the document processing system 700 is equipped with two print processing modules 702 and 704 for processing different sized documents, instances of processing lag time may occur anytime a document being processed by one processing module must wait on a document being processed by another module in order for the documents to be accumulated together. So, for example, if module 702 is processing the larger sized first page of a multiple page document, while module 704 is processing the smaller sized subsequent pages of the same document, the first module 702 may require fewer processing cycles. Resultantly, processing module 702 would have to wait before it could be sent to the accumulators 706-thus stalling the processing of all other documents input via Channel A 712-until all of the smaller sized pages are ready to be accumulated. This creates a "dependency" between the two modules, wherein the modules operate substantially independently in terms of the amount of time they require to process their respective documents, but are reliant upon one another to advance their respective documents downstream through the document processing system 700 for further processing.

To overcome such challenges, Print stream optimization (PSO) for dual dependent print stream processing modules re-orders the contents of an electronic data file that represents numerous soft copy documents of various page counts to enable the print stream processing modules 702 and 704 to operate at maximum throughput. Specifically, a select number of available single page documents, including the first page of the multiple page documents, are re-ordered prior to being submitted for printing. The re-ordering, which may be performed using computer records, i.e., pointers, affects how the single page documents are assigned to Channel A 712 to result in the single page documents being processed in approximately the same time of completion as the subsequent pages of the multiple page document. In this way, while the number of respective cycles required to complete the processing of documents in the respective modules 702 and 704 may vary, at least the larger sized first page of a multiple page document being processed by module 702 is made available for assembly at approximately the same time as the subsequent pages of the multiple page document being processed by module 704.

Moreover, the optimization is further enhanced by re-ordering the electronic data file to affect the assignment of documents to the print streams (channels A and B) such that documents having the highest page count are processed substantially first by the processing modules 702 and 704 ahead of lesser page count documents. Such prioritization maximizes the throughput capability of the print stream processing modules 702 & 704 by (1) ensuring that the more process intensive documents (highest page count documents) are processed first, and (2) by balancing the processing time of print stream processing module 702 with a select number of single page documents to have both modules completing the more process intensive (higher page count) documents at substantially the same pace. Whether the page count is 20, or two, the implementation of PSO described herein ensures such benefits.

The number of available single page documents to be processed along with the highest page count document (e.g., a multiple page document) may vary from one job run or print file to the next, and may therefore be determined in various ways. One way is through trail and error or observation, wherein the number of single page documents is set by the document processing system operator, or user 310 of the PSO service provider component 322. Another method may be based on the collection of empirical job run data or statistics accumulated during one or more runs. As yet another method of determination a load or document balancing algorithm can be used that makes the determination on the basis of the number of single pages left to allocate within the group, relative processing speeds of the print processing modules 702 and 704, etc. Regardless of the chosen method of determination, the re-ordering process described above continues until all single page documents comprising the group of documents to be optimized are used. Such functionality is achieved without disrupting the desired results to be obtained from any applicable presort grouping of documents, such as zip code presorting to obtain postal discounts.

Turning now to Fig 8, an exemplary illustration of hard copy documents to be rendered in 2-up format as input to the print stream processing modules 702 and 704 as a result of the dual dependent PSO implementation are shown. In particular, Document 8 is a multiple page document of page count 6, representing the highest page count document to be processed by the print stream processing modules 702 and 704. Dependency is prevalent, as the first page of Document 8 labeled 930 (also of noticeably larger size) is required to be processed via Channel A 712, while the subsequent pages of the document (smaller sized Document 8 pages 2-6), are required to be processed via Channel B 710. Document 9, also in 2-up format, has a page count of 5, with its first page 940 to be processed via Channel A 712, and subsequent pages of to be processed via Channel B 710. Those skilled in the art will recognize readily that the PSO implementations described herein are not limited to any particular formatting of the paper. In fact, whether the hardcopy inputs to the print stream processing modules 702 and 704 are 2-up, 1-up, duplex, etc. does not impact the scope of this disclosure, but is illustrated by way of example to better indicate the features and advantages described in the preceding paragraphs. Furthermore, while the following description depicts documents in hardcopy form for convenience, those skilled in the art will appreciate that any of the steps executed by PSO may be equally performed on softcopy documents, such as via the use of pointers to engage the re-ordering process on softcopy documents represented in a print file.

To achieve processing efficiency, PSO references the soft copy for the largest document, Document 8, and re-orders it in the print file. Subsequent processing will assign the pages to their respective print streams 710 and 712.. As illustrated, Document 8 pages 2 1002 and 3 1003 are in the first position in channel B 710. One processing cycle 1031 is used to cut horizontally 1010 and vertically 1020 to accumulate the two physical pages of the hard copy of the document. On processing cycle 3, indicated in Fig. 9 as 1033, page 6 of hard copy Document 8 is complete along with page 1 930, which was completed on processing cycle 2 1032 via Channel A 712. As described before, the completion of all pages of the document at substantially the same time irrespective of the number of processing cycles required was enabled through PSO by referencing a select number of single page documents 910-914 to be processed relatively in a duration of time required to process page 2 through 6 of Document 8 930. Having ensured the processing of the first page 930 with the processing of the subsequent pages of Document 8, the completed hard copy document is then transferred to one or more downstream modules of the document processing system (e.g., upright modules for appending additional inserts).

The next largest document, Document 9, is referenced next in the same manner described above to influence a similar processing result. The last page of Document 9 1004 is processed via Channel B 710 for completion at relatively the same time as the first page of Document 9 940. The placement of Document 9, page 1 940 is shown in the left-most position to indicate that the placement of a document during a cycle is of minor importance in the context of the exemplary embodiment described herein. Suffice to say, PSO ensures effective processing by ensuring that a number of single page documents 916-918 is selected to precede the first page of Document 9 940, such that the first page of Document 9 940 may be processed at substantially the same time as the subsequent pages of Document 9 being processed via Channel B.

The process continues until all of the single page count documents in the group are utilized. Then processing returns to normal operation. By this time, a significant number of the larger hard copy documents, which typically require the most processing effort and/or result in significant lag times on the part of the print stream processing modules, have been efficiently processed without having to regulate cycle timing.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

## Claims

1. A method of offering a print optimization, comprising:
analyzing an electronic file representing soft copy documents for a plurality of documents to be printed and processed through a document processing system to estimate an expected result of an optimizing operation if the printed documents are processed through the document processing system in accord with the optimizing operation;
presenting the estimate of the expected result of the optimizing operation to a user.

2. The method of claim 1, further comprising:
receiving an acceptance of the optimizing operation from the user following presentation of the estimate of the expected result;
running the optimizing operation on the electronic file to generate an optimized print file; and
sending the optimized print file for processing by the document processing system.

3. The method of claim 1, wherein:
the presentation of the estimate of the expected result comprises providing a graphical representation of the estimate of the expected result of the optimizing operation to a graphical user interface for presentation to the user; and
the graphical representation comprises one or more of: text characters, a chart, a graph, a pictures, a symbol, and a statistic, capable of being rendered to the graphical user interface.

4. The method of claim 1, wherein the optimizing operation includes one or more of a dual dependent channel print stream optimization and a multi-channel print stream optimization.

5. The method of claim 1, wherein the analysis estimates the expected result at least in part on the basis of information regarding performance characteristics of the document processing system and attributes of the soft copy documents contained in the print file.

6. The method of claim 1, wherein the estimate of the expected result includes one or more of an expected performance result and an expected cost of performing the optimizing operation on the print file.

7. The method of claim 1 further comprising:
analyzing document processing system run-time data collected during the execution of the optimizing operation;
presenting comparative analysis data, the comparative analysis data comparing the expected result to an actual result obtained from the execution of the optimizing operation; and
recommending one or more measures for enhancing the performance of the document processing system based on the comparison.

8. A computer system programmed to implement the method of claim 1.

9. The computer system of claim 8, comprising a server having a network interface from receiving the print file via the network and for sending the estimate of the expected result through the network to a client device of the user for presentation.

10. A software product comprising executable instructions for programming a computer to implement the method of claim 1, and a machine-readable medium bearing the instructions.

11. A method of selecting an optimizing operation offered by a service provider, for application to soft copy documents, comprising steps of:
submitting an electronic file representing soft copy documents to the service provider;
informing the, service provider of a selection of an optimizing operation from among a plurality of optimizing operations offered by the service provider;
receiving and considering simulated performance information from the service provider regarding expected performance of a document processing system upon processing the print file if optimized in accord with the selected optimizing operation; and
instructing the service provider to perform the selected optimizing operation.

12. The method of claim 11, further comprising receiving and considering a recommended optimizing operation from the service provider.

13. The method of claim 11, wherein a plurality of the steps involve communication via a network with a computer of the service provider.

14. The method of claim 11, wherein the selected optimizing operation includes one or more of a dual dependent channel print stream optimization and a multi-channel print stream optimization.

15. The method of claim 11, wherein the consideration of simulated performance information comprises a comparison of the expected performance of the document processing system upon processing the print file if optimized in accord with the selected optimizing operation to an expected performance of the document processing system upon processing the print file without being optimized in accord with the selected optimizing operation.

16. A client system programmed to implement the method of claim 11 by exchanging communications through a network with a server system of the service provider.

17. A method of offering a service to enhance document processing system performance, comprising:
analyzing run-time data for actual operation of a document processing system collected during system processing of documents in accordance with the optimization process;
comparing the analysis of the run-time data for the actual operation of the document processing system to an estimate of run-time data in accord with an available optimization service; and
recommending one or more optimization techniques, to enhance future performance of the document processing system, based on a result of the comparison.

18. The method of claim 17, wherein the available optimization service comprises one or more of a dual dependent channel print stream optimization and a multi-channel print stream optimization.

19. The method of claim 18, further comprising:
receiving a request for a specific optimization service; and
in response to the request, generating an optimized version of the electronic file representing soft copy documents in accord with the requested specific optimization service.

20. The method of claim 17, wherein the available optimization technique is one or more of a consulting service offered by an optimization service provider, product recommendations related to one or more document processing systems, a document processing system service plans and a staffing recommendation.

21. A computer system programmed to implement the method of claim 17.

22. A software product comprising executable instructions for programming a computer to implement the method of claim 17, and a machine-readable medium bearing the instructions.
